# EUROPÄISCHE PATENTSCHRIFT

(11) **EP 0 932 241 B1**
(45) Veröffentlichungstag und Bekanntmachung des Hinweises auf die Patenterteilung: **13.10.2004**
(21) Anmeldenummer: 98123158.2
(22) Anmeldetag: 04.12.1998
(51) Int. Cl.: H02K 3/14, H02K 15/04

(54) **Verfahren zur Herstellung von Leiterstäben**
Process for manufacturing bar conductors
Procédé de fabrication de barres conductrices

(30) Priorität: 26.01.1998 DE 19802759
(43) Veröffentlichungstag der Anmeldung: 28.07.1999
(73) Patentinhaber: Alstom, 75116 Paris (FR)
(72) Erfinder: Fürst, Karl Heinz, 67067 Ludwigshafen (DE)
(74) Vertreter: Dreiss, Fuhlendorf, Steimle & Becker

(56) Entgegenhaltungen:
- EP-A- 0 778 648
- DE-A- 2 314 625
- FR-A- 2 540 686
- US-A- 3 837 072
- US-A- 4 295 071
- PATENT ABSTRACTS OF JAPAN vol. 4, no. 67 (E-11), 20. Mai 1980 (1980-05-20) & JP 55 034866 A (MITSUBISHI ELECRIC CORP), 11. März 1980 (1980-03-11)

## Beschreibung

Die Erfindung betrifft ein Verfahren zur Herstellung eines Leiterstabes einer Statorwicklung für eine elektrische Maschine, insbesondere Generator, mit einem Stator und mit einem darin drehbar angeordneten Rotor, wobei jeder Leiterstab aus paarweise übereinander liegenden Teilleiterstäben aus leitfähigem Material gebildet wird, die den Stapel von einer Decklage schräg zu einer Bodenlage durchlaufen und jeweils im Decklagenbereich und Bodenbereich gleichförmige Kröpfungen aufweisen, wobei ferner die Kröpfungen von jeweils zwei übereinander gelegten, einander paarweise zugeordneten Teilleiterstäben in Längsrichtung im Abstand a zu Kröpfungen eines nachfolgenden oder vorhergehenden Paares von Teilleiterstäben versetzt angeordnet werden, welche Teilleiterstäbe in zwei nebeneinander befindlichen, seitlich aneinander grenzenden Stapeln angeordnet werden, wobei die Teilleiterstäbe jeweils paarweise übereinander liegend und jeweils mit den seitlich benachbarten Teilleiterstäben miteinander verschränkt werden, wodurch erreicht wird, daß jeder Teilleiter abschnittsweise an der dem Rotor zugewandten und abgewandten Oberfläche des Stators verläuftsowie einen Leiterstab für eine solche Statorwicklung, der nach diesem Verfahren gefertigt ist.

Es ist bekannt, bei elektrischen Großmaschinen, insbesondere bei rotatorischen Maschinen wie Motoren oder Generatoren, die einen Stator und einen darin drehbar angeordneten Rotor aufweisen, die im Stator wie im Rotor angeordneten Wicklungen unter Verwendung von Leiterstäben mit großem Rechteckquerschnitt aus elektrisch leitendem Material, wie Kupfer, zu gestalten.

Hierbei werden wegen des jeweils erforderlichen großen Querschnittes je Leiterstab die einzelnen Leiterstäbe von Teilleitem gebildet, die üblicherweise in zwei nebeneinander befindlichen Stapeln jeweils radial hintereinander mit zwischengefügter Isolierung angeordnet sind.

Um eine Widerstandszunahme infolge der Stromverdrängung aus dem Innern des Leiters an dessen Oberfläche zu vermeiden oder zumindest zu verringern, sind die einzelnen Leiter üblicherweise mit gleichförmigen Kröpfungen versehen, welche dazu führen, daß jeder Teilleiterstab abschnittsweise entlang der Oberfläche des verläuft.

Unter Kröpfung wird in diesem Zusammenhang eine doppelte Abwinklung des einzelnen Teilleiters eines Leiterstabes verstanden, welche es ermöglicht, jeden Einzelleiter bereichsweise innerhalb des Leiterstabes so mit den anderen Teilleitem zusammenzufügen, daß dieser Teilleiter wechselweise in dem einen und dem anderen, angrenzenden Leiterstapel verläuft. Damit dies kontinuierlich erfolgen kann, sind die einzelnen Teilleiter zu diesem Zweck gegeneinander wendelartig verschränkt. Dabei verläuft jeder Teilleiter abschnittsweise in gleichem Verhältnis in den vorgesehenen Ebenen der Wicklung.

Diese Möglichkeit der Widerstandsverringerung wird seit langem erfolgreich benutzt. Nun hat sich aber gezeigt, daß bei elektrischen Maschinen größerer Leistung, bei denen jeder Leiterstab eine größere Stromtragfähigkeit aufweisen muß diese Verschränkung oder Kröpfung auf Herstellbarkeitsgrenzen stößt, die nur durch andere Dimensionierung der Teilleiter erreichbar ist.

Hieraus resultiert einerseits bei der Herstellung der Teilleiter für einen Leiterstab ein bestimmter Raumbedarf für die fertigen, das heißt für die gekröpften, Teilleiter, der aus dessen Biegeradius bei der Kröpfung resultiert. Andererseits ist der im Stator zur Verfügung stehende Raum für das für die fertig gekröpften Leiterstäbe benötigte Volumen unzureichend. Die Folge ist bislang ein erhöhter Fertigungsaufwand, um dennoch in dem verfügbaren Raum die vorgesehenen Leiterstäbe einbauen zu können.

Ein derartiges Verfahren ist z.B. aus DE-A-23 14 625 bekannt.

Ausgehend von diesem Stand der Technik ist es Aufgabe der Erfindung, ein Verfahren der eingangs genannten Art sowie eine Statorwicklung mit dementsprechend hergestellten Leiterstäben anzugeben, bei welchen der Herstellaufwand verringert ist ohne Nachteil für die elektrische Funktion.

Diese Aufgabe wird erfindungsgemäß gelöst durch die Merkmale der Ansprüche 1 und 2. Weitere vorteilhaften Ausgestaltungen und Weiterbildungen der Erfindung sind in den Unteransprüchen gekennzeichnet.

Dementsprechend ist erfindungsgemäß vorgesehen, daß die Kröpfungen der Teilleiterstäbe eines Teilleiterpaares in Längsrichtung im Abstand zueinander angeordnet werden, so daß ein Zwischenraum zum Teilleiterstab des darunter liegenden Teilleiterpaares erzeugt wird, welcher die durch Materialumlagerungen beim Kröpfen hervorgerufenen Querschnittsveränderungen der Teilleiterstäbe aufnimmt.

Mit anderen Worten, die bislang bereits bekannte Kröpf- oder Schränktechnik, bei welcher darauf geachtet wird, daß die in einem definierten axialen Abstand angeordneten periodischen Kröpfungen eines jeden Teilleiters abstandsfrei am benachbarten Teilleiter anschließen, wird aufgegeben zugunsten einer neuen Kröpftechnik, bei welcher bewußt Abstände zwischen den Kröpfungen der benachbarten, das heißt der einander paarweise zugeordneten aufeinanderliegenden, Teilleiter vorgesehen sind. Diese erfindungsgemäß vorgesehenen Abstände erzeugen Zwischenräume, die genutzt werden, um die Teilleiter mit den für die Kröpfungen erforderlichen Biegeradien und den hiermit zwangsläufig verbundenen örtlichen Querschnittsverdickungen unterzubringen, ohne daß es hierfür eines zusätzlichen Aufwandes bedarf oder daß es zu unerwünschten Verspannungen des Leiterpaketes kommt.

Entgegen zunächst bestehender Bedenken, daß diese Zwischenräume sich nachteilig auf die elektrischen Eigenschaften der betreffenden, hiermit versehenen elektrischen Maschine auswirken könnten, hat sich in der praktischen Erprobung gezeigt, daß mit der erfindungsgemäßen Ausführung der Leiterstäbe die angestrebte Leistungssteigerung problemlos erreicht wird.

Die Statorwicklung ist demgemäß aus Leiterstäben gebildet, von denen jeder Leiterstab wenigstens drei Teilleiterstäbe aufweist, die in radial hintereinander befindlichen Ebenen angeordnet sind. Jeder Teilleiter weist hierbei in einem definierten Abstand angeordnete periodische Doppelkröpfungen auf, wobei jede rotorferne Kröpfung eines Teilleiters im Abstand a versetzt zu einer zugeordneten Kröpfung eines benachbarten Teilleiters der gleichen Ebene angeordnet ist.

Die mit Abstand zueinander vorgesehenen Kröpfungen benachbarter Teilleiter ermöglichen die Festlegung weniger enger Biegeradien, wodurch die Materialbeanspruchung vermindert ist. Ferner ist so das bisherige Problem von Richtarbeiten und erforderlichen Nachbearbeitungen vermieden, um die geforderte Paßgenauigkeit zu erreichen. Mit Hilfe der erfindungsgemäßen Verfahrensweise ist es nunmehr auf einfache Weise möglich, die geforderten engen Abmessungstoleranzen für die Leiterpakete sicher einzuhalten.

Es ist vorgesehen, daß die rotorfemen Kröpfungen im Abstand a/3 zu der korrespondierenden Kröpfung eines benachbarten Teilleiters der gleichen Ebene angeordnet sind. Hierdurch wird ein Zwischenraum erzeugt, der quasi als Toleranzausgleich dient, das heißt, daß die Teilleiter mit größeren Querschnitten und dementsprechenden Biegeradien diesen Zwischenraum nutzen.

Vorzugsweise ist in dem Zwischenraum Isolierwerkstoff angeordnet, wie zum Beispiel lsolierpapier, mit welchem unter anderem die Teilleiter umwickelt sind. Es kann aber in bestimmten Fällen vorteilhaft sein, zusätzlich Gießharz als Isoliermaterial vorzusehen.

Gemäß einer weiteren Verbesserung ist die Statorwicklung dadurch gekennzeichnet, daß die Teilleiter um 2/3 bezogen auf die stets gleiche Kröpfungsoder Schränkungslänge zueinander versetzt angeordnet sind. Das bedeutet, daß benachbarte Teilleiter einer Ebene jeweils entsprechend zwei Drittel dieses Abschnittes aneinander angrenzen, während sie im letzten Drittel divergieren, das heißt nicht mehr aneinander anliegen.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

Es zeigen:
- Fig. 1: einen herkömmlichen aus gekröpften Teilleitern gebildeten Leiterstab gemäß dem Stand der Technik in Seitenansicht und
- Fig. 2: den Leiterstab gemäß Fig. 1 im Querschnitt entlang Schnittlinie II-II in Fig 1;
- Fig. 3: einen erfindungsgemäßen, aus gekröpften Teilleitem gebildeten Leiterstab in Seitenansicht und
- Fig. 4: den Leiterstab gemäß Fig. 3 im Querschnitt entlang Schnittlinie IV-IV in Fig. 3.

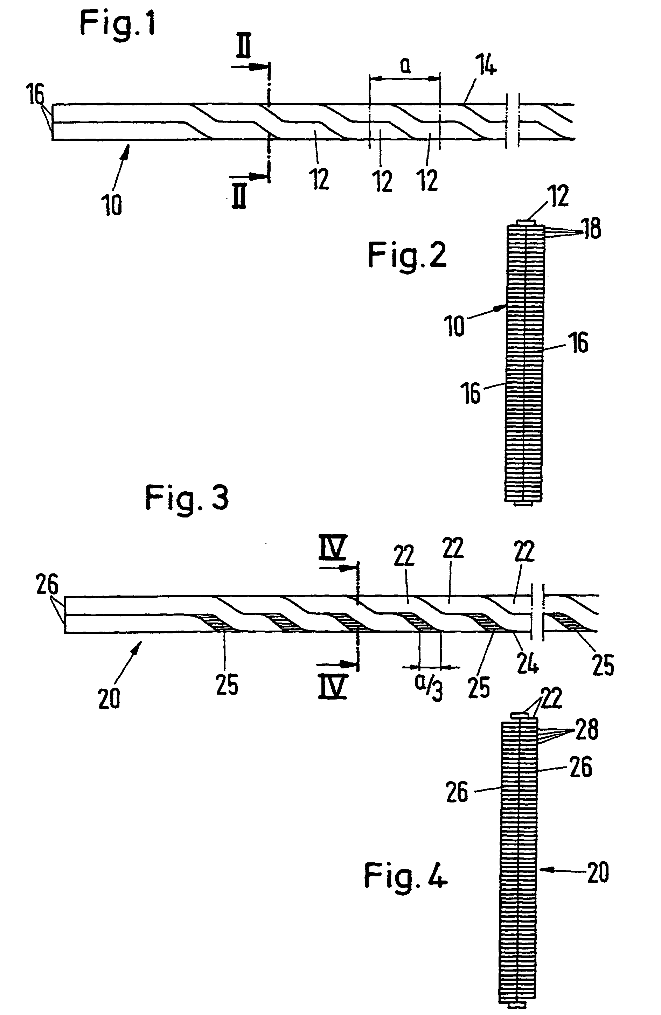

In Fig. 1 ist ein dem Stand der Technik entsprechender Leiterstab 10 dargestellt, der aus Teilleitern 12 gebildet ist, die in bestimmten Abstand jeweils eine Kröpfung 14 um etwa 45° aufweisen, die, genauer gesagt, als Doppelkröpfung ausgeführt ist.

Die Teilleiter 12 sind in zwei nebeneinander befindlichen Stapeln 16 in Lagen 18, das heißt in bezug auf die Einbausituation im betreffenden Generator radial hintereinander, angeordnet.

Bezogen auf die Länge des Leiterstabes 10 ist eine bestimmte Teilung hinsichtlich der Kröpfungen 14 vorgesehen, das heißt, zwischen jeder Kröpfung eines Leiterstabes 10 besteht ein fester Abstand "a". Dieser Abstand "a" ist für alle Teilleiter 12 gleich. Daraus folgt, daß einander benachbarte Teilleiter stets auch unmittelbar seitlich aneinander angrenzen, das heißt auch im Bereich der Kröpfung 14.

Bei Teilleitern mit größeren Querschnitten als bisher üblich stellt sich das Problem, daß deren Verformung bei der Kröpfung mit dem gleichen Biegewinkel von etwa 45° entweder zu größerem Raumbedarf führt oder Nacharbeiten erfordert, die einen zusätzlichen Aufwand darstellen und demgemäß die Herstelldauer verlängern.

In Fig. 2 ist ein Querschnitt dieses bekannten Leiterstabes 10 entlang der Schnittlinie I-I in Fig. 1 gezeigt. Anhand dieser Schnittdarstellung wird deutlich, daß eine sehr hohe Anzahl von Lagen 18 je Leiterstab 10 erreicht wird, wobei die Teilleiter 12 von Lage 18 zu Lage 18 jeweils den Stapel 16 wechseln.

In Fig. 3 ist eine Ausführung eines Leiterstabes 20 gezeigt, die der Ausführung nach dem Stand der Technik weitgehend entspricht. So ist der Leiterstab 20 ebenfalls aus zwei paarweise einander zugeordneten Teilleitern 22 gebildet, die ebenfalls Kröpfungen 24 aufweisen und mit den vorhergehenden und nachfolgenden Teilleitern 20 verschränkt sind. Allerdings werden im Gegensatz zum stand der Technik. im gezeigten Beispiel die zum Leiterstab 20 gehörigen einzelnen Teilleiterstäbe 22 derart gekröpft, daß zwischen jeder Kröpfung 24 ein axialer Abstand a/3 zueinander besteht, das heißt, die paarweise einander zugeordneten Teilleiter sind axial zueinder versetzt, so daß der jeweils untere Teilleiter 25 in einer Länge von a/3 sichtbar wird.

Dieser Versatz der Teilleiterstäbe eines Teilleiterpaares 20 führt dazu, daß ein Zwischenraum mit einer axialen Erstreckung entsprechend dem Versatz entsteht, der für die jeweilige Kröpfung 24 als Toleranzzone zur Verfügung steht. Hierdurch ist es ermöglicht, daß aus zwei oder mehr einander zugeordneten Einzelleitern 22 gebildete Teilleiter 20 ohne zusätzlichen Raumbedarf in der jeweiligen Leiternut untergebracht werden können.

Dies beruht darauf, daß die durch das Kröpfen der Teilleiter 22 hervorgerufenen örtlichen Querschnittsveränderungen, die aus Materialumlagerungen resultieren, von dem Zwischenraum, der prinzipiell genauso groß ist wie der durch den Versatz jeweils sichtbar werdende Teil des jeweiligen unteren Teilleiterstabes 22 und als Toleranzzone dient, aufgenommen werden.

Vorteilhafterweise ist der verbleibende Raum des durch den axialen Versatz der Teilleiterstäbe erzeugte Zwischenraumes mit Isolierstoff ausgefüllt.

Die Bereitstellung dieser durch den Versatz der Teilleiterstäbe 22 erzeugten Toleranzzone von vorzugsweise a/3 Länge reicht völlig aus, um einerseits den erforderlichen Füllgrad der hier nicht dargestellten Leiternuten zu erreichen und gleichzeitig einen Mehraufwand für Nachbearbeitung zu vermeiden. Durch den sich mit dieser Maßnahme einstellenden räumlichen Abstand können die übrigen bisherigen Biegeparameter trotz erhöhten Materialquerschnittes der Teilleiter 22 beibehalten werden.

## Patentansprüche

1. Verfahren zur Herstellung eines Leiterstabes (20) einer Statorwicklung für eine elektrische Maschine, insbesondere Generator, mit einem Stator und mit einem darin drehbar angeordneten Rotor, wobei jeder Leiterstab (20) aus paarweise übereinander liegenden Teilleiterstäben (22) aus leitfähigem Material gebildet wird, die den Stapel von einer Decklage schräg zu einer Bodenlage durchlaufen und jeweils im Decklagenbereich und Bodenbereich gleichförmige Kröpfungen (24) aufweisen, wobei ferner die Kröpfungen (24) von jeweils zwei übereinander gelegten, einander paarweise zugeordneten Teilleiterstäben (22) in Längsrichtung im Abstand a zu Kröpfungen (24) eines nachfolgenden oder vorhergehenden Paares von Teilleiterstäben (22) versetzt angeordnet werden, welche Teilleiterstäbe (22) in zwei nebeneinander befindlichen, seitlich aneinander grenzenden Stapeln (26) angeordnet werden, wobei die Teilleiterstäbe (22) jeweils paarweise übereinander liegend und jeweils mit den seitlich benachbarten Teilleiterstäben (22) miteinander verschränkt werden, wodurch erreicht wird, daß jeder Teilleiter (20) abschnittsweise an der dem Rotor zugewandten und abgewandten Oberfläche des Stators verläuft, **dadurch gekennzeichnet, daß** die Kröpfungen (24) der Teilleiterstäbe (22) eines Teilleiterpaares (20) in Längsrichtung im Abstand zueinander angeordnet werden, so daß ein Zwischenraum zum Teilleiterstab (22) des darunter liegenden Teilleiterpaares (20) erzeugt wird.

2. Statorwicklung für eine elektrische Maschine, insbesondere Generator, mit einem Stator und mit einem darin drehbar angeordneten Rotor gefertigt nach dem Verfahren gemäß Anspruch 1, mit Leiterstäben (20), die von wenigstens drei in zwei seitlich aneinander grerizenden Stapeln (26) und in zwei radial hintereinander befindlichen Ebenen angeordneten und mit gleichförmigen in einem Abstand a angeordneten periodischen Kröpfungen versehenen und miteinander verschränkten Teilleiterstäben (22) aus leitfähigem Material gebildet sind, so daß jeder Teilleiter (20) abwechselnd abschnittsweise an der dem Rotor zugewandten Oberfläche des Stators verläuft, **dadurch gekennzeichnet, daß** die Kröpfungen (24) der Teilleiterstäbe (22) eines Teilleiters (20) in Längsrichtung zueinander im Abstand angeordnet sind, so daß ein Zwischenraum zum Teilleiterstab (22) des darunter liegenden Teilleiters (20) der der nächsten Ebene (28) gebildet ist.

3. Statorwicklung nach Anspruch 2, **dadurch gekennzeichnet, daß** der Abstand der Kröpfungen (24) zweier paarweise einander zugeordneter Teilleiterstäbe (22) a/5 bis a/2, vorzugsweise a/3, beträgt.

4. Statorwicklung nach Anspruch 3, **dadurch gekennzeichnet, daß** in dem Zwischenraum Isoliermaterial angeordnet ist.

5. Statorwicklung nach einem der Ansprüche 2 bis 4, **dadurch gekennzeichnet, daß** die Teilleiter (22) um 2/3 zueinander versetzt angeordnet sind.

## Claims

1. Method for the manufacture of a conductor rod (20) with a stator winding for an electrical machine, particularly a generator, with a stator and a rotor that is rotatably mounted within it, whereby each conductor rod (20) consists of subconductor rods (22) of conductive material which are placed on top of each other and which run from a top layer through the stack at an angle to the base layer and exhibit uniform offsets (24) in the top layer region and bottom region respectively, whereby the offsets (24) moreover are longitudinally staggered in position by in each case two subconductor rods (22) allocated as a pair at a distance a to the offsets (24) of a subsequent or preceding pair of subconductor rods (22) in two adjacent, laterally adjoining stacks (26), whereby the subconductor rods (22) in each case lie on top of each other in pairs and are in each case interlaced with the laterally adjoining partial conductor rods (22), thereby ensuring that sections of each partial conductor (20) are in contact with the stator surface that is turned away from or turned towards the rotor, **characterised in that** the offsets (24) of the subconductor rods (22) of a subconductor rod pair (20) are positioned at a longitudinal distance from each other so that a clearance is brought about with respect to the subconductor rod (22) of the subconductor rod pair (20) lying underneath.

2. Stator winding for an electrical machine, particularly a generator, with a stator and a rotor that is rotatably mounted within it, manufactured according to the method described in claim 1, with conductor rods (20) which are arranged in two radially successive planes of at least three, in two laterally adjoining stacks (26) and with uniform offsets with a periodic spacing a and with subconductor rods (22) of conductive material which are interlaced with each other so that each subconductor (20) runs alternately in sections on the surface of the stator that is turned towards the rotor, **characterised in that** the offsets (24) of the subconductor rods (22) of a subconductor (20) are spaced longitudinally with respect to each other so that a clearance is formed at the subconductor rod (22) of the subconductor pair underneath (20) with respect to the following level (28).

3. Stator winding according to claim 2, **characterised in that** the distance between the offsets (24) of two subconductor rods (22) arranged in pairs is a/5 to a/2, and preferably amounts to a/3.

4. Stator winding according to claim 3, **characterised in that** there is insulating material in the clearance.

5. Stator winding according to any one of claims 2 to 4, **characterised in that** the subconductors (22) are offset with respect to each other by a ratio of 2/3.

## Revendications

1. Procédé de fabrication d'une barre conductrice (20) d'un enroulement statorique pour une machine électrique, en particulier une génératrice, comportant un stator avec un rotor disposé à l'intérieur de façon rotative, chaque barre conductrice (20) étant constituée de barres conductrices élémentaires (22) en matériau conducteur placées par paires les unes sur les autres, qui traversent l'empilage obliquement d'une couche supérieure à une couche inférieure et présentent à la fois dans la zone de la couche supérieure et dans la zone de la couche inférieure des coudes (24) de même forme, les coudes (24) de deux barres conductrices élémentaires (22) placées l'une sur l'autre et associées les unes aux autres par paires étant disposés en décalage dans le sens longitudinal à une distance a des coudes (24) d'une paire précédente ou suivante de barres conductrices élémentaires (22), lesquelles barres conductrices élémentaires (22) sont disposées en deux empilages (26) se trouvant l'un à côté de l'autre, attenants latéralement, les barres conductrices élémentaires (22) se trouvant les unes sur les autres par paires et étant posées en quinconce par rapport aux barres conductrices élémentaires (22) adjacentes, ce qui permet d'obtenir que chaque conducteur élémentaire (20) longe section par section la surface du stator tournée vers et opposée au rotor, **caractérisé en ce que** les coudes (24) des barres conductrices élémentaires (22) d'une paire de conducteurs élémentaires (20) sont disposés dans le sens longitudinal à distance les uns des autres, de sorte que l'on crée un espace intermédiaire par rapport à la barre conductrice élémentaire (22) de la paire de conducteurs élémentaires (20) placée en-dessous.

2. Enroulement statorique pour une machine électrique, en particulier une génératrice, comportant un stator avec un rotor disposé à l'intérieur de façon rotative, fabriqué en utilisant le procédé selon la revendication 1, comportant des barres conductrices (20) qui sont constituées d'au moins trois barres conductrices élémentaires (22) limitrophes en matériau conducteur disposées en deux empilages (26) attenants latéralement et en deux niveaux se trouvant radialement les uns derrière les autres, et qui sont munies de coudes de même forme disposés régulièrement à une distance a, de sorte que chaque conducteur élémentaire (20) longe alternativement section par section la surface du stator opposée au rotor, **caractérisé en ce que** les coudes (24) des barres conductrices élémentaires (22) d'un conducteur élémentaire (20) sont disposés à distance les uns des autres dans le sens longitudinal, de façon à former un espace intermédiaire par rapport à la barre conductrice élémentaire (22) du conducteur élémentaire (20) du niveau suivant (28) placé en-dessous

3. Enroulement statorique selon la revendication 2, **caractérisé en ce que** la distance entre les coudes (24) de deux barres conductrices élémentaires (22) disposées par paires les unes par rapport aux autres se situe entre a/5 et a/2, de préférence à a/3.

4. Enroulement statorique selon la revendication 3, **caractérisé en ce qu'**un matériau isolant est disposé dans l'espace intermédiaire.

5. Enroulement statorique selon une des revendications 2 à 4, **caractérisé en ce que** les conducteurs élémentaires (22) sont disposés avec un décalage de 2/3 les uns par rapport aux autres.
